# EUROPEAN PATENT APPLICATION

(11) **EP 4 807 494 A1**
(43) Date of publication of application: **16.09.2026**
(21) Application number: 26162328.4
(22) Date of filing: 04.03.2026
(51) Int. Cl.: G06F 1/20, G06F 1/3206, G06F 1/329, G06F 9/48, G06F 1/324, F41H 3/00

(54) **A METHOD FOR CONTROLLING A PORTABLE COMPUTING DEVICE IN A THERMALLY RESTRICTED MODE**

(30) Priority: 13.03.2025 US 202519078740
(71) Applicant: Carnegie Robotics, LLC, Pittsburgh, Pennsylvania 15201 (US)
(72) Inventor: THYBO, Claus, Pittsburgh, PA 15201 (US); LAROSE, David, Pittsburgh, PA 15201 (US)
(74) Representative: Inspicos P/S

(57) **Abstract**

A method for controlling a portable computing device is disclosed. The computing device receives an input causing the computing device to start operating in a thermally restricted mode. Upon starting operation in the thermally restricted mode, a temperature difference, ΔT=T_{dev}-T_{amb}, between a surface temperature, T_{dev}, of the computing device and an ambient temperature, T_{amb}, is derived. Computing tasks running on the computing device or scheduled to run on the computing device are prioritized, and for each of the prioritized computing tasks, a thermal impact on the surface temperature, T_{dev}, of the computing device by performing the computing task, is estimated. The computing device is operated by performing computing tasks while taking the priority order of the computing tasks and the thermal impact of the computing tasks into account, and in such a manner that the temperature difference, ΔT, is maintained within a predefined range around zero.

## Description

### FIELD OF THE INVENTION

The present invention relates to the control of a portable computing device in a thermally restricted mode. The portable computing device is designed to be operated in areas/situations where the surface temperature of the device, relative to the ambient temperature is critical. More particularly, the method according to the invention allows the surface temperature of the device to be controlled in an accurate manner.

### BACKGROUND OF THE INVENTION

Many situations exist where regulation or control of the thermal signature, or thermal output of a device is important. Electronic components of a device may get damaged or become unable to operate properly if the temperature of the device is outside a particular range. Alternative situations, such as in military environments, may require the thermal signature of the device to closely match the ambient temperature to minimise the likelihood of detection via a thermal camera or the like.

The rise or fall of device temperature is linked to the total computational load of the device, which is related to how many tasks are currently running on the (for example) processor of the device, since the processor produces heat when running. Commencing more tasks, or more complex tasks, may increase the total computational load, cause more thermal energy to be output from the device, and therefore increase the surface temperature of the device. Similarly, discontinuation of tasks, or exchanging complex tasks for simple ones may result in a reduction of device temperature.

Existing solutions for regulation and control of device temperature are predominantly hardware based. For example, the hardware, e.g., the casing of the device may be designed such that the processor is thermally isolated from the surroundings. Alternatively, the hardware may be designed such that heat is easily dissipated to the surroundings, allowing the temperature of the device to be lowered. Alternatively or additionally, cooling devices, such as heat exchangers and/or cooling fans, may be applied. Other existing solutions involve throttling the speed at which elements of the computing device execute in order to decrease the total amount of power dissipated by the device when the device temperature exceeds a threshold. This technique is often called "frequency scaling" or "CPU throttling."

However, having a fixed hardware does not allow for adaptive control of the thermal signature of a device. For example, the hardware would not be able to quickly and efficiently counter changes to ambient temperature. Similarly, frequency scaling has been applied only in very limited ways, such as to manage instantaneous device temperature.

Additionally, in particular with relation to military situations, there may be instances where there is a specific time period/zone where the control of the thermal signature is crucial. Operation in such time periods or zones may be referred to as a thermally restricted mode. Outside such time periods or zones, it may be of less significance whether the temperature of the device is different from the ambient temperature.

Therefore, there is the need for a control system to actively change the thermal output of a device during operation in a thermally restricted mode.

### DESCRIPTION OF THE INVENTION

It is an object of embodiments of the invention to provide a method for controlling a portable computing device, which allows for active and efficient change of the thermal output of the device when in a thermally restricted mode.

The invention provides a method for controlling a portable computing device, the method comprising the steps of:
- the computing device receiving an input causing the computing device to start operating in a thermally restricted mode,
- upon starting operation in the thermally restricted mode, deriving a temperature difference, ΔT=T_{dev}-T_{amb}, between a surface temperature, T_{dev}, of the computing device and an ambient temperature, T_{amb},
- prioritizing computing tasks running on the computing device or scheduled to run on the computing device,
- estimating, for each of the prioritized computing tasks, a thermal impact on the surface temperature, T_{dev}, of the computing device by performing the computing task, and
- operating the computing device by performing computing tasks while taking the priority order of the computing tasks and the thermal impact of the computing tasks into account, and in such a manner that the temperature difference, ΔT, is maintained within a predefined range around zero.

Thus, the method according to the invention is a method for controlling a portable computing device.

In the present context, the term 'portable computing device' should be interpreted to mean a general-purpose machine that can execute instructions, process data and perform substantial computations without human intervention, that can easily be carried or moved by a human. The portable computing device may comprise basic computing resources such as a processor, memory, storage, communication ability, and network access. The portable computing device may have its own power source. Examples of a portable computing device may include a laptop, mobile phone, tablet, smart watch, dedicated device or the like. The portable computing device may be small enough to be held in one hand. The portable computing device may be a wearable device configured to be worn on the body or attached to clothing, e.g., a smart watch, anklet, headset or the like. The portable computing device may comprise a casing.

In the method according to the invention, the computing device initially receives an input. In the present context, the term 'input' should be interpreted to mean a signal entering the device.

The received input causes the computing device to start operating in a thermally restricted mode. In the present context, the term 'thermally restricted mode' should be interpreted to mean that the device is in a state where the amount of heat generated by the device is of importance. The device may stay in the thermally restricted mode for a set period of time, whilst in a set geographical location, and/or until a second input is received. During the thermally restricted mode the heat output from the device is controlled. Outside the thermally restricted mode it may be unimportant as to the amount of heat output from the device.

An example of when a thermally restricted mode may be necessary could be in a military operation. When entering enemy territory, enemies may use thermal imaging cameras for detection. Therefore, being in control of the thermal output of the device at this time/in this area would be important, e.g. in order to ensure that a thermal signature of the device does not stand out from the ambient environment.

Similarly, thermally restricted mode may be useful when changing from a "room temperature" environment (i.e., temperature of around 25°C) to a surrounding with extreme temperatures where the electronic components of the device could be damaged. Therefore, controlling the temperature to protect the internal components may be important.

Note that it may be beneficial to enter the thermally restricted mode and therefore start controlling the temperature before the situation requiring the thermally restricted mode becomes critical. For example, it may be desirable to start controlling the device before entering the area with extreme temperature in order to ensure an appropriate device temperature once outside.

Moreover, it may be beneficial for there to be a delay between receiving the input to trigger going into thermally restricted mode and entering the thermally restricted mode. This may allow time for the device to complete existing tasks or operations before adapting control to the thermally restricted mode.

Thus, the device may start operating in the thermally restricted mode immediately upon receipt of the input, or a period of time may be allowed to lapse from receipt of the input before the device starts operating in the thermally restricted mode. This will be described in further detail below.

Thus, operating the device in the thermally restricted mode means that whilst in the mode, the device takes actions to control the amount of heat output from the device.

Upon starting operation in the thermally restricted mode, a temperature difference, ΔT=T_{dev}-T_{amb}, between a surface temperature, T_{dev}, of the computing device and an ambient temperature, T_{amb}, is derived.

In the present context, the term 'surface temperature' should be interpreted to mean a temperature of the outer part of the device, i.e., the surface in contact with the external environment/air. If the device is held in a casing, the surface temperature may relate to the temperature at the outer surface of the casing. Accordingly, the surface temperature of the device is indicative for the temperature of the device that may be perceived, e.g. by external detection equipment, such as thermal cameras, and it therefore represents a thermal signature of the device.

A variety of methods to determine the surface temperature of the device may be used. One or more temperature sensors or thermometers may be attached to or embedded within the surface and/or casing of the device and a mean value of the thermometers and/or sensors taken. Alternatively, the thermometers and/or sensors may be placed internally within the device and the surface temperature extrapolated from these based on knowledge of the materials/mechanical properties of the system. Alternatively or additionally, a predictive formula/simulation/mathematical model to predict the surface temperature may be used, e.g. based on one or more of the sensor measurements, receiving external information from the internet or such as described above.

In the present context, the term 'ambient temperature' should be interpreted to mean the temperature of the air or environment surrounding the device. Thus, the ambient temperature is the temperature when the device enters the thermally restricted mode, at the position where the device is expected to be when entering the thermally restricted mode. The ambient temperature may be the current temperature, or the ambient temperature may be a prediction of the future temperature. The ambient temperature may be the temperature of the room the device is in. The ambient temperature may also be the outside temperature.

The ambient temperature may change whilst the device is in the thermally restricted mode, e.g., due to changes in weather or the device being moved from one place to another. For example, if the device is taken from inside to outside, the ambient temperature would change from the room temperature to the outside temperature.

There are a variety of methods that may be used to determine the ambient temperature. A thermometer or temperature sensor may be placed outside of the device and be used to measure the temperature of the surroundings. Alternatively, the device may comprise network capabilities and the ambient temperature may be externally sent to the device by another system. The ambient temperature may also be inferred based on measurement of temperatures within and/or on the surface of the device using a predictive formula, simulation, or mathematical model. Such a predictive formula, simulation, or mathematical model may use temperature measurements over a time window in order to more accurately estimate ambient temperature.

In the present context, 'temperature difference' should be taken to mean a comparative value between the ambient temperature and the surface temperature. In other words, the temperature difference is the surface temperature minus the ambient temperature. Therefore, the temperature difference may be a positive or negative value. Thus, the temperature difference, ΔT, reflects how much the detectable temperature of the device differs from the temperature of the environment surrounding the device, while the device is operating in the thermally restricted mode, and it is, thus, a measure for the thermal signature of the device, relative to its surroundings.

Accordingly, a low temperature difference between the ambient temperature and the surface temperature of the device may mean that thermal output of the device is hard to detect via thermal imaging. In military applications thermal imaging is often used to detect enemies.

In thermal imaging the camera may detect the infrared radiation emitted from the object. The amount of radiation emitted by an object increases with temperature; in other words, the camera may use this to distinguish between objects. A colour scale may often be applied to the thermal image allowing it to be more easily comprehended. The greater the temperature difference between an object (in this case the device) and the surroundings the greater the difference in colour and therefore the easier it is to detect.

Thus, if there is minimal difference between the surface temperature of the device and the ambient temperature it may be hard to detect the device on a thermal image. Thus, when the temperature difference is small, the thermal signature of the device is also small, and it may be easier to hide or blend in from enemies.

In other words, the device monitors how hot it is compared to the ambient temperature. Knowing this difference in temperature values allows the device to take appropriate steps to control the heat output.

The method according to the invention also includes the step of prioritizing the computing tasks running or scheduled to run on the computing device.

In the present context, the term 'computing tasks' should be interpreted to mean a computation carried out by the portable computing device. A computing task could also be defined as a task being a unit of execution or a unit of work. Examples of computing tasks may be, determining device location, sending or receiving information from an external source, taking measurements via sensors, mathematical calculations, analysing data, updating software, data clean-up, or the like.

In the present context, some tasks may have higher priority than others. This may be especially true in the thermally restricted mode. In other words, it is more important that some tasks are performed than other tasks. For example, it may be more important for the portable device to send/receive external notifications than carry out system updates. Similarly, it may be more important to carry out a localisation task than receive updates from social media or perform data clean-up.

When considering the prioritisation of tasks, many algorithms/methods exist and may be used. For example, methods such as weighted scoring, Eisenhower Matrix, earliest deadline first or the like, may be used in this context.

When the portable computing device carries out a task it may generate heat. The amount of heat generated may be proportional to the amount of computation, network communication, memory I/O, or storage I/O being performed by the device, all of which are directly affected by the number of tasks carried out by the portable computing device at one time, and/or the complexity of the tasks carried out, and/or the speed at which those tasks are carried out. The amount of heat generated may also be proportional to the clock speed of the device. In other words, the more complex the task, the more tasks carried out at one time, or the higher the clock speed of the device, the more work the computing device may have to do.

For each of the tasks it is important to know their thermal impact. In the present context, the term 'thermal impact' should be interpreted to mean the increase in temperature at the surface of the device as a consequence of the portable computing device carrying out a task. It may also be interpreted as the decrease in temperature at the surface as a consequence of discontinuing a task.

Thus, the next step of the method according to the invention is estimating, for each of the prioritized computing tasks, a thermal impact on the surface temperature, T_{dev}, of the computing device by performing the computing task.

By estimating the thermal impact of each of the tasks, the device may be able to carry out the necessary actions to reduce or increase the overall thermal impact of the tasks and thus the overall temperature of the device. The higher the thermal impact of a task the more effect it may have on the overall surface temperature of the device.

The thermal impact of the task may be determined by a mathematical model whereby the physics of the system is taken into account. Alternatively, the thermal impact of the task may be estimated based on experience and existing data of similarly complex tasks performed at similar or different clock speeds.

Finally, the computing device is operated by performing computing tasks while taking the priority order of the computing tasks and the thermal impact of the computing tasks into account, and in such a manner that the temperature difference, ΔT, is maintained within a predefined range around zero.

In other words, the computing device may be operated so that the difference in ambient temperature and device surface temperature may be kept to a minimum. In the context the predefined range is the allowable absolute value of the temperature difference. The predefined range may between ±1°C, and ±5°C.

Therefore, by performing more or fewer tasks, the temperature of the device can be increased or decreased. Knowing the thermal impact each task has on the device allows more accurate control of the temperature/thermal output of the device. Thus, by controlling the device in this way (by number of tasks being performed) the low temperature difference can be accurately maintained.

Note that controlling the number of tasks being performed may allow the computing elements of the device to be operated at lower clock speeds without jeopardizing task completion deadlines, thus taking advantage of traditional frequency scaling techniques.

As previously discussed, ensuring that the temperature difference is kept to a minimum reduces the chances of, for example, the device being detected on a thermal imaging camera, i.e. the thermal signature of the device relative to its surroundings is kept low.

Since the surface temperature of the device is controlled by appropriately selecting computing tasks to be performed, a minimal temperature difference can be accurately and efficiently maintained even if the ambient temperature changes during the thermally restricted mode. Thus, the thermal camouflage may be maintained.

Additionally, since the priority order of the computing tasks are taken into account, it is ensured that the most important, high priority tasks are carried out during the thermally restricted mode and, if the temperature is required to be lowered, the tasks deemed least important may be discontinued first. Thus, the reduction in performance of the device is also kept to a minimum.

The step of operating the computing device may comprise the step of:
- in the case that the temperature difference, ΔT, is positive and above a predefined first threshold value, discontinuing, in priority order running computing tasks, starting with computing tasks of low priority, so as to decrease the surface temperature, T_{dev}, of the computing device and reducing the temperature difference, ΔT.

According to this embodiment, when operating the computing device, it is investigated whether the temperature difference, ΔT, is positive or negative. In the case that the temperature difference is positive, this indicates that the surface temperature of the device is higher than the ambient temperature. Thus, if this is the case, it is investigated whether this temperature difference is greater than the predetermined threshold.

As described above, in the case that the temperature difference is above the predetermined threshold, the thermal signature of the device may be higher than its surroundings and thus the device may be easier to detect/observe on a thermal imaging camera. Therefore, when this is the case, running computing tasks are discontinued in order to reduce the heat production of the computing device, and thereby reduce the surface temperature of the device so as to approach the ambient temperature and decrease the temperature difference, ΔT.

By decreasing the number of tasks performed by the device, the surface temperature of the device can be cooled. Moreover, by first discontinuing the tasks with a low priority/importance it may be ensured that tasks with high priority are kept running even during the thermally restricted mode. Note that the priority of the tasks may be contextual and depend on the situation the operator of the device is in, examples may include emergency communication, navigation to safe places etc. Decreasing the number of tasks may allow elements of the device to be operated at a lower frequency without unduly delaying the completion of the tasks that are running.

Another technical effect of decreasing the number of tasks running on the device is that the portable computing device may conserve energy and therefore lower overall power consumption. Thus, this may increase the time the portable computing device can be in operation before charging is required which may be beneficial in a thermally restricted mode where it may not be possible to access more charge. Additionally, running fewer tasks may minimize heat generation and fan activity and thus prevent excessive battery drain while also extending battery lifespan. The number of/which of the tasks are to be discontinued is based on the estimated thermal impact of each task. It may also be desirable to reinvestigate the temperature difference after all estimated tasks have been discontinued to ensure the temperature difference is below the predetermined threshold. Alternatively, the control system may reinvestigate the thermal difference after each, or a set number of tasks, have been discontinued and then adapt the choice of tasks to be discontinued accordingly. For example, if the thermal impact of a particular task is less than estimated, more tasks should be discontinued in order to achieve the required temperature difference. Alternatively, if a particular task has a greater thermal impact that expected, it may be necessary to discontinue fewer tasks to ensure that the surface temperature does not become too low compared to the ambient temperature. The latter option therefore allows for increased accuracy in the temperature control of the device.

Thus, according to this embodiment, the device is allowed to be controlled such that the if the surface temperature is too hot compared to the ambient temperature, the device can be cooled to a temperature closer to the ambient temperature.

The step of operating the computing device may comprise the step of:
- in the case that the temperature difference, ΔT, is negative and below a predefined second threshold value, initiating one or more computing tasks in priority order, starting with computing tasks of high priority, so as to increase the surface temperature, T_{dev}, of the computing device and reducing the temperature difference, ΔT.

According to this embodiment, the investigation regarding whether the temperature difference, ΔT, is positive or negative reveals that the temperature difference is negative. This indicates that the surface temperature of the device is lower than the ambient temperature. Similarly to the embodiment described above, it is investigated whether this temperature difference is greater than the predetermined threshold.

If the surface temperature of the device is too low below the ambient temperature, in other words the temperature difference is greater than the threshold, the device may be detected on a thermal camera, similarly to what is described above. Therefore, it may be necessary to increase the temperature of the device so that the temperature difference becomes within the acceptable second predetermined threshold.

According to this embodiment, to increase the surface temperature of the device, the device may initiate more tasks. The number of tasks/which tasks may be based on the thermal impact of each of the tasks.

Which of the tasks to initiate first is based on the priority order. This ensures that more important tasks are initiated before less important ones.

As with the previous embodiment, it may be beneficial to reinvestigate the temperature difference after a set number of tasks have been initiated. The set number of tasks could be each task, every two tasks, all the tasks estimated to be required to raise the temperature to within the acceptable threshold or the like. Alternatively, it may be beneficial to reinvestigate the temperature difference after a certain amount of time has elapsed, such as 1 second, 1 minute, 30 minutes, etc.

Thus, according to this embodiment, the device is allowed to be controlled such that if the surface temperature is too low compared to the ambient temperature, the device can be heated to a temperature closer to the ambient temperature.

The input may be received at a first point in time, t₀, and the start of operation in the thermally restricted mode may occur at a second point in time, t₁, wherein t₁ occurs later than t₀.

According to this embodiment, the point in time at which the input signal is received by the device is t₀. At t₀ the device is made aware that it is desired to start operating in the thermally restricted mode. However, the point in time at which the device actually starts operating in the thermally restricted mode is t₁, which occurs later, i.e. after a period of time has been allowed to lapse. This could, e.g., be relevant in the case that operation in the thermally restricted mode is occasioned by a planned situation or mission.

As an alternative, the device may start operating in the thermally restricted mode immediately upon receipt of the input. This could, e.g., be relevant in the case that the need for operating the device in the thermally restricted mode occurs suddenly or unexpectedly.

The difference in time between the input being received and starting operating in the thermally restricted mode may, e.g., be 0-1 second, 1-2 seconds, 2-4 seconds, 4-10 seconds, 10-30 seconds, 30 seconds - 2 minutes, 2-10 minutes or the like.

If the method comprises the delay between the input, t₀, and commencing the thermally restricted mode, t₁, then it may also comprise the step of, during the period between t₀ and t₁, preparing the computing device for operation in the thermally restricted mode.

According to this embodiment, once the input is received by the device, the device has sufficient time to prepare to enter the thermally restricted mode. For example, in some instances, when operating in the thermally restricted mode, it may be required to discontinue some tasks. Then, preparing to discontinue the tasks during the period between t₀ and t₁ may be beneficial, for instance, it may give the device time to complete the low priority tasks due to be discontinued. Furthermore, in the case that the surface temperature of the device differs significantly from the ambient temperature at the time, t₀, where the input is received, the time interval until the thermally restricted mode is entered, i.e. until t₁, can be utilised for appropriately increasing or decreasing the surface temperature of the device to approach the ambient temperature. The step of preparing the computing device to enter the thermally restricted mode may comprise:
- in a first phase, initiating further computing tasks to increase the surface temperature, T_{dev}, of the computing device, and
- in a second phase, discontinuing one or more of the initiated further computing tasks to allow the surface temperature, T_{dev}, of the computing device to decrease.

Thus, according to this embodiment, the step of preparing the computing device to operate in the thermally restricted mode may comprise at least two phases. In the first phase the device may carry out additional, or more complex, further tasks. In this phase, the device may operate at higher clock speeds. This allows the device to complete many more tasks that may, depending on priority, be unable to be carried out during the thermally restricted mode. The further tasks may be initiated depending on priority. Alternatively, the further tasks may be selected randomly, based on their thermal effect or the like. The device may be in the thermally restricted mode for a long period of time and therefore completing as many tasks as possible before entering this mode may be beneficial.

Carrying out these additional tasks will increase the surface temperature, T_{dev}, of the device, possibly to a level where the surface temperature of the device differs significantly from the ambient temperature. However, whilst not in the thermally restricted mode the control of the surface temperature of the device is less important.

In the second phase of preparation, the additional tasks that had been initiated during the first phase are discontinued, so that the device becomes ready to enter the thermally restricted mode. Now, not only additional tasks may be completed, but the device is at an appropriate temperature to commence the thermally restricted mode. Since the surface temperature of the device was increased during the first phase of preparation, the temperature difference between the surface of the device and the ambient is high when the device enters the second phase of preparation. This increases the heat transfer from the device to the ambient, thus allowing a faster and more efficient cooling of the surface of the device during the second phase of preparation. This may be because objects that are very hot cool down faster than slightly hot ones because a larger thermal gradient increases the rate of heat transfer to the surroundings. This faster cooling occurs as conduction, convection, and radiation become more effective due to the greater temperature difference. As the thermal gradient decreases and the object nears ambient temperature, the cooling rate gradually slows down.

Accordingly, the two-phase preparation step not only allows additional, such as low priority tasks to be performed before the thermally restricted mode is entered, it also means that the device will cool quicker due to the increased surface temperature. This is due to the Newton's Law of Cooling, which states that the rate of heat transfer is proportional to the temperature difference between the object and its surroundings.

Therefore, this may be beneficial if the time period between t₀ and t₁ is short. Initially raising the temperature by completing additional/further tasks would allow the device to more quickly be cooled, so that the temperature difference is at the required minimum.

The step of preparing the computing device may further comprise:
- in a third phase, pre-cooling the surface of the computing device to a temperature below a predefined temperature level.

The third phase of the preparation step may be completed after the first and second phases detailed above. Alternatively, it may be completed in isolation.

The phase of pre-cooling the surface may comprise discontinuing extra tasks, so that the surface temperature of the device is brought below the predefined temperature level. The predefined temperature level may be the same temperature as the ambient temperature. Alternatively, the predefined temperature level may be higher (warmer) than the ambient temperature. In contrast, the predefined temperature level may be less (cooler) than the ambient temperature. The discontinued extra tasks may be selected based on priority, thermal impact, randomly or the like.

Alternatively, the precooling may comprise running the existing tasks at a slower clock speed, which would have a reduction in thermal output and thus surface temperature of the device. Further alternatively the pre-cooling phase may comprise using a piece of hardware such as a fan to lower the surface temperature of the device to below the predefined temperature level.

The benefit of the phase of pre-cooling may be, whilst in the thermally restricted mode, it may become necessary to carry out additional, possibly unexpected, tasks which would increase the surface temperature of the device. If the device has been pre-cooled, these additional tasks may be carried out without raising the temperature of the device too much, such as greater than the ambient temperature, or outside the first predetermined threshold. Therefore, the device may remain undetectable on a thermal image. Furthermore, this may simply allow some additional tasks to be performed once the thermally restricted mode has been entered.

The step of preparing the computing device for operation in the thermally restricted mode may comprise taking into account an ambient temperature prevailing at a location where the computing device is expected to be positioned when operation in the thermally restricted mode is started.

In this instance, it may be that the input is triggered whilst in a first location. The first location may be an army base, shelter, room, inside area or the like. If there is a delay between t₀ and t₁, i.e., between the time of received input and the time when the device enters the thermally restricted mode, the device may enter the thermally restricted mode in a second location. This second location may be outside, in enemy territory, in an exposed area or the like.

There may be a difference between the ambient temperature at the first location and the ambient temperature at the second location. Therefore, it is beneficial to use the ambient temperature in the second location to calculate the temperature difference. This is due to the fact that the device will actually be in the second location when the thermally restricted mode is entered, and thus it may be required to be thermally camouflaged in that location.

If the temperature difference is calculated using the ambient temperature at the first location, the temperature difference may be inaccurate, and the device may still stand out on a thermal image.

To detect/predict the ambient temperature at the position where the computing device is expected to be positioned when operation in the thermally restricted mode is started, a sensor external to the device may be used. Alternatively, to predict the value at this location a simulation/model may be used. Further alternatively, the temperature at this second location may be sent to the computing device from an external server.

Therefore, as an example, the computing device may be attached to a soldier waiting inside a base camp. The computing device may receive an input to enter into thermally restricted mode whilst inside the base camp building where the temperature is, for example, 21°C. The desire is that the soldier will leave the base camp and go outside, and that the computing device will commence operation in the thermally restricted mode once outside where the temperature may be 35°C. Therefore, the comparison of temperatures should be made based on the outside temperature as that is where the computing device is positioned during the thermally restricted mode. Otherwise, the temperature difference may be calculated incorrectly and the soldier may still be visible via thermal imaging.

In this instance, a thermometer may have been placed outside, and the thermometer may be used to determine the outside temperature and communicate it with the computing device.

The method may further include the step of, in the case that a thermally restricted mode is not planned or scheduled, performing computing tasks regardless of priority and thermal impact.

In this case, not planned or scheduled should be taken to mean that neither the input signal has been received by the device, nor that it is expected to be.

Therefore, in this instance the surface temperature of the device may not be important. The thermal impact of the tasks may not be important, and the tasks may be completed in any order. Additionally, if no thermally restricted mode is planned, then it may even be beneficial to perform some low priory tasks, so that these get performed before a thermally restricted mode event is scheduled or planned.

The step of estimating a thermal impact may be performed on the basis of a thermal capacity of the computing device and on the temperature difference, ΔT.

In this instance the thermal capacity of the computing device is defined as the amount of energy required to raise the temperature of the computing device by a unit value. The thermal capacity may be measured in (J/K) in which case the unit value would be one kelvin. Other units of measurement for the thermal capacity may be (J/°C), (J/°F) or the like. The thermal capacity of the computing device is a physical property. A material with high thermal capacity can absorb and retain more heat, leading to slower temperature changes, while a low thermal capacity material heats up and cools down quickly. In other words, if a material or device has a high thermal capacity, large amount of heat is needed to raise or lower the temperature, the material resists rapid temperature fluctuations and any temperature changes are slow. Thus, the thermal capacity of the device has a significant impact on the temperature dynamics of the process of heating and cooling the device.

The thermal capacity of the device may also be calculated based on the specific thermal capacity of the consistent parts, multiplied by the mass of those parts. The thermal capacity of the device may also be found experimentally. The surface temperatures of different parts of the device may differ. For example, the surface temperature of a heat sink may be different than the surface temperature of a mounting flange, sun shield, connector, or side panel. In this case, the thermal behaviour of the device may be modelled using finite element analysis, mathematical models, simulation, or other techniques.

Thus, the thermal capacity of the computing device and the thermal behaviour of the device assembly, are relevant parameters with regard to estimating how heat generated by the processor of the computing device, when performing computing tasks, transfers to the outer surface of the computing device, as well as how heat is dissipated from the surface. Therefore, taking these parameters into account allows for an accurate estimate to be obtained.

By characterising the thermal characteristics of the computing device in this way, the surface temperature of the device may be more accurately estimated. A more accurate surface temperature of the device means that a smaller temperature difference, ΔT, may be achieved and thus the device may have a superior thermal camouflage.

Equations and methods to calculate the thermal impact based on temperature difference between the device and the environment and the thermal capacity of the device are known.

The step of operating the computing device may comprise allowing the temperature difference, ΔT, to increase above a level outside the predefined range, in the case that one or more critical computing tasks need to be performed, or in the case that one or more critical computing tasks must be completed more quickly than anticipated.

Whilst in the thermally restricted mode, it may be necessary or desirable to perform one or more critical computing tasks that may have not been planned or anticipated, or to perform one or more critical computing tasks more quickly than planned or anticipated. These one or more critical computing tasks may raise the surface temperature outside the predefined range, however the benefit of completing these tasks may outweigh the thermal cost.

There may be the situation that new information becomes available that makes it important to complete one or more tasks more quickly than previously anticipated. In this case, the benefit of running the device at higher speeds may outweigh the thermal cost.

There may be the situation that a new task is sent to the device from an external server or the like. Then, this new task may be assessed to determine whether it is critical or not. If it is found to be critical, the task may be carried out, even if it results in an increase in the surface temperature of the device outside the predetermined first threshold. Alternatively, it may be the case that all notifications coming from a predetermined external source may be automatically considered critical or the like.

Examples of critical tasks may be critical notifications from an external server, detection of enemies, localisation, transmitting emergency distress signals or the like.

In the case of the critical task being transmitting emergency distress signals, interpreting images via AI or computer vision, translating or decoding important messages, etc., the user may determine that the task is critical enough to carry out and thus increase the temperature of the device.

The input may be provided manually, i.e. by a human being causing the input to be provided to the device. The input may, e.g., be provided locally to the device, e.g. by a person carrying the device operating a button, switch, toggle, or other such mechanical system situated on, or close to the computing device. In this case, a user close to the computing device may provide the input by pressing the button, switch, etc.

Alternatively, the input may be a local voice command, where the computing device further comprises, or is connected to, a microphone. Then, the user may command the computing device to enter the thermally restricted mode with a set word or phrase and this is used as the input.

Further alternatively, the input may be made remotely and sent to the computing device via wireless communication from a server, another computing device or the like.

For example, a button may be pressed on one computing device, and this may trigger not only that device to go into the thermally restricted mode, but also the other devices in the vicinity, e.g. for devices carried by members of a group of people.

In another example, a server may be situated at a central command centre or in an aircraft capable of viewing a wide area below of several soldiers. When certain soldiers are required to go into the thermally restricted mode, the server may send commands/inputs to each of the computing devices.

As yet another alternative, the input may be provided automatically, e.g. in response to relevant sensor readings.

The computing device may comprise two or more different processing systems, each processing system being configured to perform one or more types of computing tasks, and the step of estimating a thermal impact may comprise taking into account the processing system configured to perform a given task. Examples of different processing systems may be a simulation environment, a CPU, GPU, TPU or the like. Each processing system may be configured to perform one or more types of computing tasks. For instance, a GPU may be more effective/efficient at completing digital image processing than other processing units. Therefore, completing a digital image processing task on a GPU may have less of a thermal impact on the device than if the digital image processing task was performed on a different processing unit. Different processing units may have independent clocks, and these clocks may be independently adjustable to higher or lower clock speeds.

Thus, as previously stated, the step of estimating a thermal impact may comprise taking into account the processing system configured to perform a given task, and the clock speed at which that processing system is configured to run.

If the computing device comprises two or more different processing systems, the method of operating the device may also comprise the step of optimizing a schedule of assignment of computing tasks to different processing systems depending on the total thermal impact of all tasks. This optimization may include configuring the clock speed of each processing unit, with associated impact on both the completion time and thermal impact of tasks executed on that processing unit at that clock speed.

Many different optimization algorithms for heterogenous computing systems are known, such as, First-Come, First-Served (FCFS), FCFS with No Queuing (FCFS-NQ), Minimum Expected Completion Time (MECT), and Minimum Expected Execution Time (MEET), and these may be adapted to incorporate a cost function related to thermal impact of all the tasks.

Therefore, the cost function may relate to minimising/maximising the thermal impact of all the tasks, or getting as close to a set predetermined thermal impact as possible.

Alternatively, reinforcement learning algorithms, such as neural networks, gradient descent, or evolutionary algorithms may be used to minimise/maximise the thermal impact of all the tasks or keep the thermal impact as close as possible to a predetermined value.

The method may further comprise the step of predicting a temperature difference, ΔT_{pred}, within a future prediction horizon, based on the estimated thermal impact of the tasks currently running on the computing device, the estimated thermal impact of the tasks scheduled to run on the computing device within the future prediction horizon, and expected ambient temperature within the future prediction horizon, and the step of operating the computing device may comprise operating the computer device such that the predicted temperature difference, ΔT_{pred}, is maintained within the predefined range.

In this context the future prediction horizon is taken to mean a time period for which reliable predictions about the behaviour of the computing device and its surrounding can be made. The prediction horizon may be between 1-2 minutes, 2-4 minutes, 4-10 minutes, 10 minutes - 1 hour or the like.

First the device investigates what tasks are currently running on the device and what the thermal impact of these tasks are. The device also investigates what tasks are scheduled to run on the device prior to and within the predictable time period and estimates a thermal impact value for these tasks. The device also investigates a predicted ambient temperature for the future prediction horizon.

The computing device is operated such that for the future prediction horizon, ΔT_{pred}, is maintained within the predefined range. In this instance ΔT_{pred} may, e.g., be ±1°C or ±5 °C.

Including the analysis of the future prediction horizon may allow long term planning of the control of the computing device. Including this step may allow the decision to increase or decrease the number of tasks being carried out on the device to be based on more data, such as more values of ΔT_{pred.} This may also result in more accurate control of the device that may be able to counteract changes to the environment or the device ahead of time.

The step of operating the computing device may comprise adjusting a clock frequency of the computing device.

As previously discussed, the amount of heat generated by the device may be proportional to the clock speed of the device. The clock speed may be also termed clock rate or clock frequency and is a measure of how fast the device executes tasks/instructions. The higher the clock speed, the faster tasks are carried out and thus the more work the computing device may have to do. Therefore, a higher clock speed may result in an increase surface temperature.

It is therefore possible to control the surface temperature of the device, and thus the temperature difference, ΔT, by varying the clock speed. This may have the benefit that to decrease the temperature of the device, all tasks can still be carried out, i.e., none have to be discontinued, but the tasks are carried out more slowly.

### BRIEF DESCRIPTION OF THE DRAWINGS

The invention will now be described in further detail with reference to the accompanying drawings in which
Figs. 1-3 illustrate a portable computing device being controlled in accordance with a method according to an embodiment of the invention,
Figs. 4-8 illustrate method steps of a method according to various embodiments of the invention,
Figs. 9-12 are graphs showing how the surface temperature of a portable computing device changes as a result of the steps of a method according to various embodiments of the invention, and
Fig. 13 is a flow chart illustrating a method according to an embodiment of the invention.

### DETAILED DESCRIPTION OF THE DRAWINGS

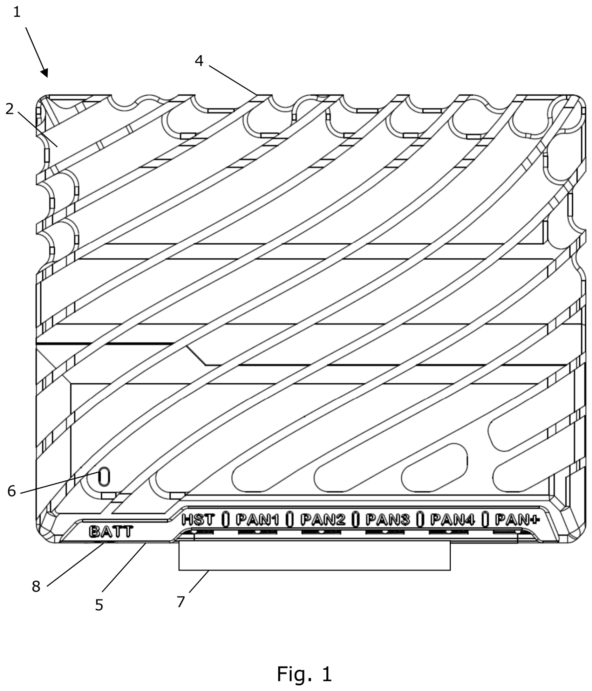

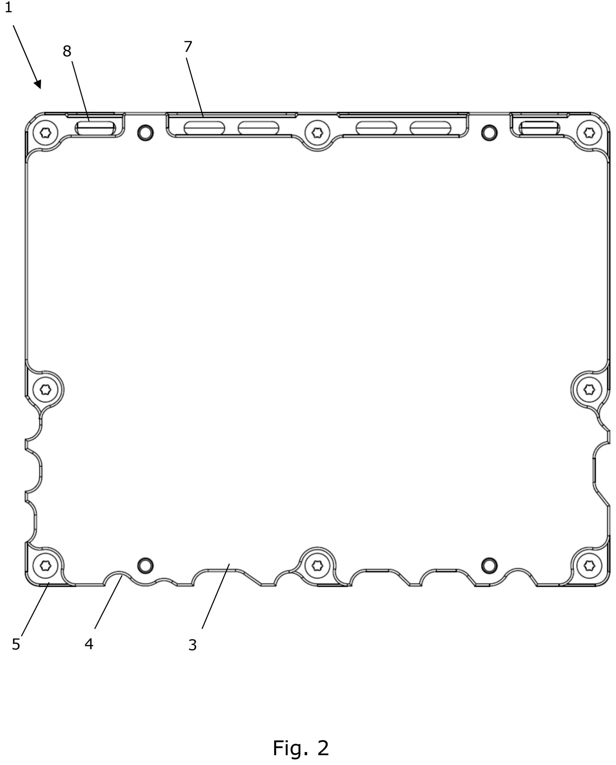

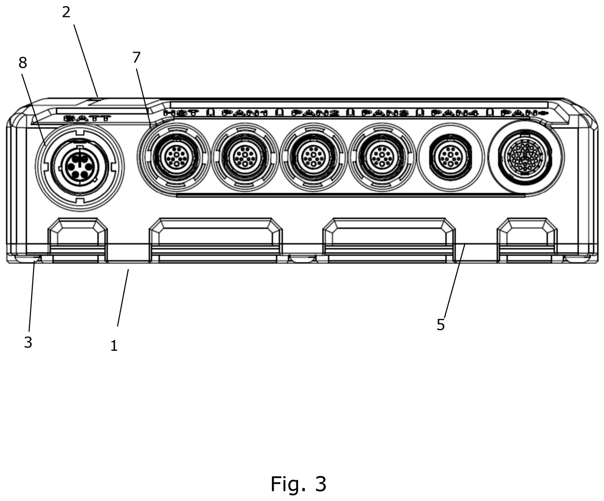

Figs. 1-3 illustrate an example portable computing device 1 being controlled in accordance with a method according to an embodiment of the invention. Fig. 1 is a top view of the device 1, Fig. 2 is a bottom view of the device 1, and Fig. 3 is a side view of the device 1.

In Fig. 1, a top surface 2 of the device 1 is visible. A bottom surface 3 of the device 1 is shown in Figure 2.

In this embodiment, it is the top surface 2 with which the surface temperature of the method is associated. The top surface 2 is designed to be in contact with the outer environmental atmosphere.

In Figs. 1-3 the top surface is not planar. The surface 2 may have, as shown in Fig. 1, cooling ribs 4. Additionally, the sides of the device 1 are also uneven and comprise ridges/grooves 4. This uneven surface increases the surface area of the device 1. The larger the surface area the easier it may be to dissipate the heat generated by the device 1 and thus the quicker the device 1 may cool down.

Note that the surface of the device 1 may be, as is the case in Figs. 1-3, the surface of a casing 5 which encloses the device 1. In Figs. 1, 2 and 3, the casing 5 has two parts, a first part which forms the top surface and a second part which forms the bottom surface. In the case of Figs. 1-3 casing parts are hollow, allowing for other parts of the device 1 (e.g., processor, battery, sensors etc) to be held within the casing 5. The outside of the casing 5 has the cooling ribs 4 manufactured into it. The two parts of the casing 5 are fastened together using screws, but alternatives like a clipping mechanism or glue may also be used. The casing 5 may be manufactured from plastic, carbon fibre, metal, glass, bamboo or the like, and different portions of the casing may be manufactured from different materials.

In Figs. 1-3, to measure the temperature at the surface 2 of the device 1, a temperature sensor 6 arranged at or near the top surface 2 is used. The temperature sensor 6 may be mounted on or embedded within the casing 5.

Fig. 3 shows a side view of the device 1 also shown in Figs. 1 and 2. From Fig. 3 a number of information ports 7 are visible. Also shown is a battery port 8. These ports 7 may allow a variety of cables to be connected to the device 1, which may allow signals and information to be exchanged between compatible devices, e.g., a headset. The battery port 8 may allow the battery of the device 1 to be charged when the device 1 is not in use. In an alternative scenario the battery port 8 may also allow the battery to be charged whilst in use, the charge coming from a portable charging device (not shown). In an alternative scenario, the device 1 may not contain a battery, and power may be provided to the device through the battery port 8.

The information ports 7 may also allow a WIFI, Bluetooth or similar wireless technology dongle, or other piece of computer hardware that enables wireless connection, to be attached to the main device. Naturally, the mechanism for wireless communication may alternatively be located within the casing 5.

The information ports 7 may also allow a cabled sensor to be connected to the device 1 and attached elsewhere on the wearer, such as on the shoulder, back, or the like in order to measure the ambient temperature.

The device 1 shown in Figs. 1-3 may be operated according to the claimed method. Thus, the device 1 is initially operating in a mode whereby the surface temperature of the device 1 is not particularly important. Thus, the surface temperature of the device 1 does not need to be close to ambient temperature.

The device 1 receives an input to enter a thermally restricted mode. The device 1 may then use, for example, the temperature sensor 6 to determine the surface temperature, T_{DEV} of the top surface 2 of the device 1. The device 1 may also detect the ambient temperature T_{AMB}.

The device 1 may alternatively be sent information regarding the ambient temperature T_{AMB} by an external source such as an external server. The device 1 compares the surface temperature T_{DEV} and the ambient temperature T_{AMB} to determine a temperature difference ΔT and thus what the next cause of action should be.

The device 1 prioritizes the computing tasks running or being scheduled to run on the device 1. These tasks may be running on the processor of the device 1. Note that there may be one or more processors within the device 1 and the tasks may be distributed between each of the processors.

The device 1 estimates, for each of the tasks running or due to be run on the device 1, a thermal impact of the task. In other words, the effect that completing or performing the task may have on the surface temperature, T_{DEV}, of the device 1. Note that if there is more than one processor present in the device 1, the type of processer used to complete particular tasks may have an effect on the thermal impact of the task. For instance, some processor types may be configured to better perform some types of tasks.

Taking into account the priority order of the tasks, the device 1 may either initiate new tasks or discontinue tasks running on the device 1 with the aim of altering the surface temperature, T_{DEV}, of the device 1 so that the temperature difference ΔT becomes as close as possible to zero. Note that there is a predetermined threshold value that the temperature difference ΔT may be within.

Accordingly, when the device 1 enters the thermally restricted mode, either immediately upon receipt of the input or after a period of time has been allowed to lapse, the temperature, T_{DEV}, of the top surface 2 of the device 1 will be close to the ambient temperature, T_{AMB}, and the thermal signature of the device 1 is therefore low.

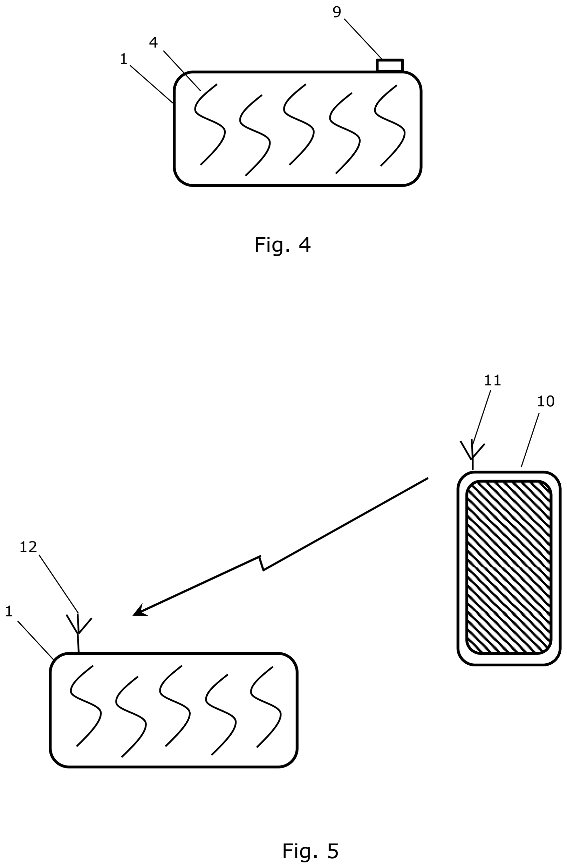

Fig. 4 is a schematic view of a portable computing device 1, which may, e.g., be of the kind illustrated in Figs. 1-3, or it may be an alternative example of the device.

Notably the device 1 in Fig. 4 has an input button 9 located on one of the side surfaces. In the example device of Figs. 1-3 the input button 9 may be located on the top 2, bottom 3 or one of the side surfaces. In Fig. 4, the input button 9 is within easy reach/access to the user. Note that a button 9 is just one example of a physical input and many other methods such as switches exist. By activating the physical input button 9, the user begins the process of the device entering into the thermally restricted mode, e.g. in the manner described above with reference to Figs. 1-3. Thus, in this instance it may be the user who determines when the device 1 enters the thermally restricted mode. This has the benefit of being a simple solution where the user can enter the thermally restricted mode without additional hardware/software that may malfunction, and without requiring communication, since the input is provided locally.

Fig. 5 is a schematic view of a portable computing device 1, which may be the example device 1 of Figs. 1-3, or it may be an alternative example of the device.

Depicted in Fig. 5 is an alternative method to the button press depicted in Fig. 4 for initiating the thermally restricted mode. In this instance, an external device 10, fitted with a transmitter element 11, is in wireless communication with the portable computing device 1. Therefore, the portable computing device 1 has at least a receiving element 12. In this case, the external device 10 is a mobile phone but it may also be a tablet, computer, laptop, or the like, or it may be a device similar or even identical to the portable computing device 1. In this instance, a command to initiate the thermally restricted mode is made on the external device 10, such as through a button press, verbal command or the like, and this command is transmitted wirelessly to the portable computing device 1. The portable computing device 1 then, upon receiving the command, considers this to be an input and thus initiates the thermally restricted mode, e.g. in the manner described above with reference to Figs. 1-3.

Thus, in the embodiment illustrated in Fig. 5, the input causing the device 1 to start operating in thermally restricted mode is created by means of the external device 10, rather than locally, at the device 1 itself. Moreover, the decision to enter into the thermally restricted mode is not taken by the user of the device 1, but instead by a user of the external device 10. This may be beneficial if the operator of the external device 10 is privy to additional information relating to whether it is necessary to enter the thermally restricted mode (i.e., if the operator can see enemy troops which the wearer of the device 1 cannot).

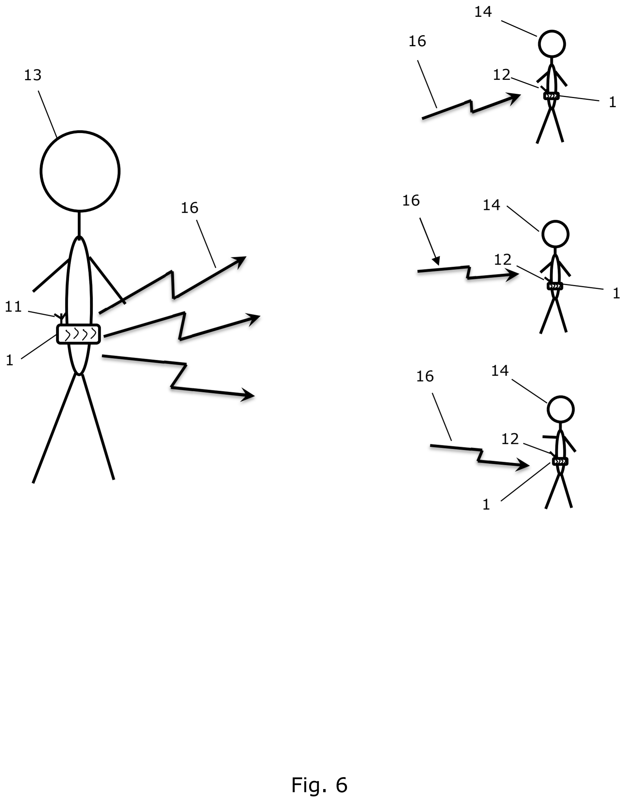

Fig. 6 depicts a further scenario for initiating the thermally restricted mode. Instead of an external device 10 being the instigator for the input to the thermally restricted mode, Fig. 6 depicts the scenario where there are multiple computing devices 1, and one of the computing devices 1 is the instigator. Thus, depicted in Fig. 6 is the portable computing device 1, where in this instance the primary portable computing device 1 is a wearable, attached to the waist of an instigating user 13. Thus, in this scenario the top surface 2 faces away from the user 13, and the bottom surface 3 is substantially in contact with the user 13.

Additionally depicted in Fig. 6 are other human users 14. The human users 14 are also wearing portable computing devices 1. It may be the case that the computing devices 1 worn by the human users 14 have less capabilities/function than the primary computing device 1 worn by the instigator user 13.

The instigator user 13 may a team leader, a squadron leader, or the like. Alternatively, the instigator user 13 may simply be the member of the team that first considers it necessary to enter the thermally restricted mode (e.g., if they are the first to spot enemy troops). The human users 14 may be other members of a team.

The situation may arise where all devices 1 carried by members 13, 14 of the team should enter the thermally restricted mode. In this instance the computing device 1 worn by the instigator user 13 comprises at least a transmitter 11, and the other computing devices 1 each comprise at least a receiver 12. The instigator user 13 carries out a command, such as pressing a button on their computing device 1, which acts as an input for their computing device 1, causing their computing device 1 to initiate the thermally restricted mode. The command from the instigator user 13 also causes their computing device 1 to transmit, via the transmitter 11, an initiation signal 16. The initiation signal 16 may be received by the receivers 12 associated with each of the other computing devices 1, and this received initiation signal 16 interpreted as the required input to initiate the thermally restricted mode.

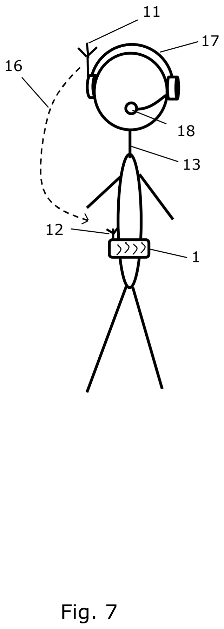

Fig. 7 is a schematic view of the portable computing device 1, where the portable computing device 1 is a wearable and is attached to the user's 13 waist. In this scenario, the portable computing device 1 is connected via either a wired or wireless (as depicted) connection to a headset 17. In this scenario the headset comprises a microphone 18 configured to register vocal input commands from the user 13. The headset comprises at least a transmitter 11 that can transmit an initiation signal 16 to be received by the portable computing device 1. As with previous scenarios, the initiation signal 16 is interpreted by the portable computing device 1 as the required input to initiate the thermally restricted mode. Thus, Fig. 7 depicts another way of providing an input to initiate the thermally restricted mode. The method depicted in Fig. 7 has the benefit that the user 13 themselves can still initiate the thermally restricted mode without the requirement of external input, but using a hands free method. So, if the user 13 was carrying, e.g., a gun, aid, cargo or the like, thermally restricted mode can still be initiated.

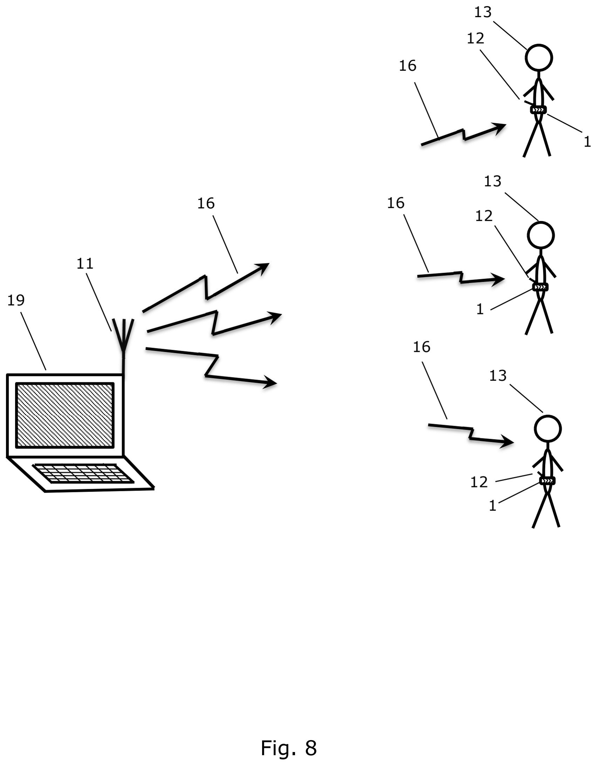

Fig. 8 is a schematic view of a team of users 13, each wearing a portable computing device 1. Fig. 8 also depicts a server 19, which is in wireless communication with each of the portable computing devices 1. The server 19 comprises at least a transmitter 11 and each of the portable computing devices 1 comprises at least a receiver 12. The server 19 may be a server, laptop, computer, or the like. It may be situated in a safe location, such as in a house, army base, on a helicopter or the like. The server 19 may be controlled by a user external to the team, who is about to control the server 19 to transmit, via the transmitter 11, an initiation signal 16, to be received by each of the portable computing devices 1. As with previous scenarios, the initiation signal 16 may be interpreted by the portable computing devices 1 as the required input to initiate the thermally restricted mode. This method of providing the input to enter the thermally restricted mode is similar to Fig. 5 in that an external device 10 / server 19 is used. However, in Fig. 5 only one device 1 receives the input to enter the thermally restricted mode, whereas in Fig. 8, like Fig. 7, many devices 1 receive the input. Moreover, the method depicted in Fig. 8 is similar to the method depicted in Fig. 6, in the sense that one initiation signal 16 is transmitted to several portable computing devices 1 simultaneously. However, in Fig. 8 the signal 16 is sent from the server 19 and activated by a remotely positioned person, rather than from a device 1 worn by a member 13 of the team being present at the location of the multiple devices 1 receiving the signal 16.

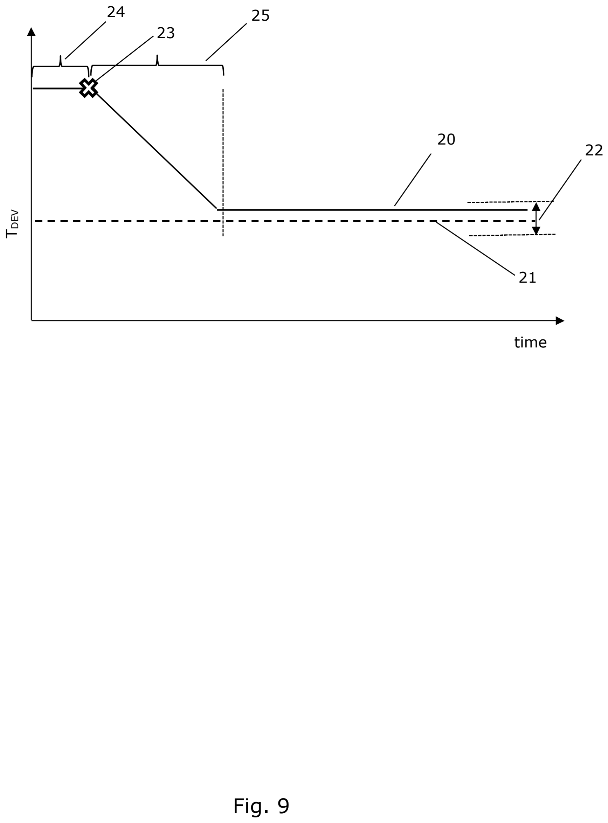

Fig. 9 is a temperature graph showing how the surface temperature of the device 20 varies over time, as a method according to a first embodiment of the invention is carried out.

Fig. 9 shows that in one embodiment of the invention, the surface temperature of the device, T_{dev}, 20 is initially higher than the ambient temperature, T_{amb}, 21. During the first region 24 the device 1 is not operating in the thermally restricted mode. The device 1 then receives an input 23 causing the device to immediately start operating in the thermally restricted mode. Upon starting in the thermally restricted mode, the device 1 prioritizes computing tasks running, or scheduled to run on the computing device 1. The device 1 then also estimates a thermal impact on the surface temperature, T_{dev}, 20 of the computing device 1 by performing each of the computing tasks. Based on the priority and thermal impact of each of the tasks, in the time period following the initiation of the thermally restricted mode 25, the device 1 discontinues the tasks with the aim of reducing the surface temperature of the device, T_{dev}, 20. The time period following the initiation of the thermally restricted mode 25 (i.e., when tasks are discontinued) lasts until the difference in temperature between the surface temperature of the device, T_{dev}, 20 and the ambient temperature, T_{amb}, 21 is within a predetermined range around zero 22. Once this is obtained, the thermal signature of the device is low.

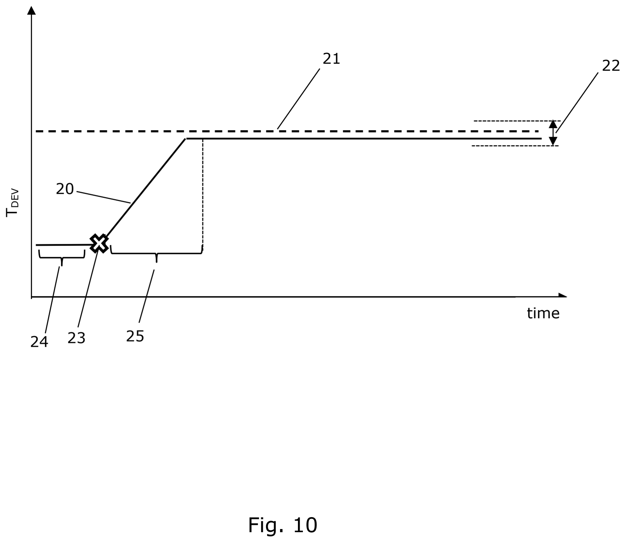

Fig. 10 is a temperature graph showing how the surface temperature of the device 20 varies over time, as a method according to a second embodiment of the invention is carried out. Depicted in Fig. 10 is a scenario where the surface temperature of the device, T_{dev}, 20 is initially lower than the ambient temperature, T_{amb}, 21. During the region 24 the device is not operating in the thermally restricted mode. In this instance, in the time period following the initiation of the thermally restricted mode 25, instead of discontinuing tasks running on the device when the input causing the device to start operating in a thermally restricted mode is received 23, as detailed in the previous embodiment (depicted in Fig. 9), the number of tasks running on the device is increased according to priority, in order to increase the surface temperature of the device, T_{dev}, 20, until the difference in temperature between the surface temperature of the device, T_{dev}, 20 and the ambient temperature, T_{amb}, 21 is within a predetermined range around zero 22. Similarly to the embodiment illustrated in Fig. 9, this results in a low thermal signature of the device.

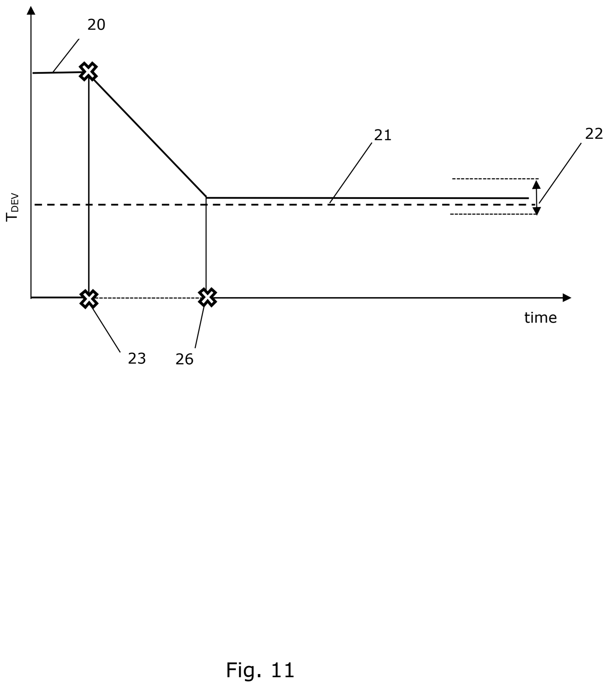

Fig. 11 is a temperature graph showing how the surface temperature of the device 20 varies over time, as a method according to a third embodiment of the invention is carried out. Depicted in Fig. 11 is a scenario where there is a delay between receiving the input 23 and commencing operating in the thermally restricted mode. The input is received at t₀, 23 then there is a delay, and the device starts operating in the thermally restricted mode at t₁ 26. Thus t₁ 26 is after t₀ 23. This delay, or warning period is used to prepare the device for operating in the thermally restricted mode. Therefore, the device uses this period (between t₀, 23 and t₁ 26) to prepare to enter the thermally restricted mode. It can be seen that this is done by discontinuing tasks running on the device, essentially in the manner described above with reference to Fig. 9. This may have the benefit that the device already has the required surface temperature when entering the thermally restricted mode at time t₁ 26 and therefore may already be thermally camouflaged. In other words, the device may not have to increase or decrease the number of tasks running on it and thus have a period of temperature change during the thermally restricted mode.

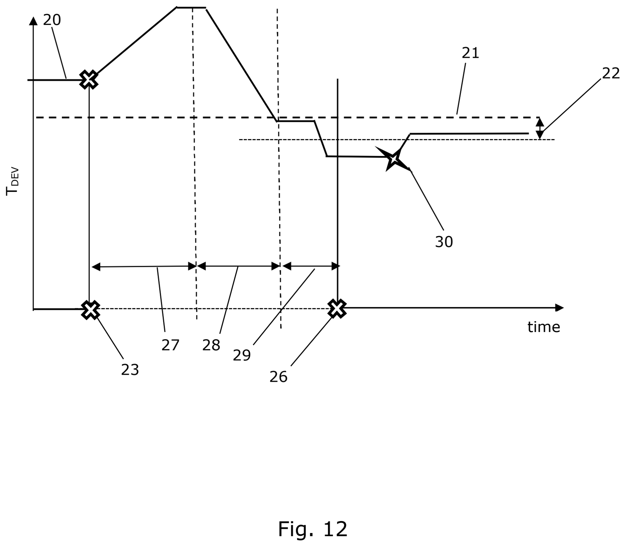

Fig. 12 is a temperature graph showing how the surface temperature of the device 20 varies over time, as a method according to a fourth embodiment of the invention is carried out. The embodiment illustrated in Fig. 12 is similar to the embodiment illustrated in Fig. 11 in the sense that there is a delay from receiving the input 23 until entering the thermally restricted mode 26.

In the embodiment of Fig. 12 the delay between t₀ 23 and t₁ 26 comprises three distinct preparation phases. During the first phase, 27, additional tasks are carried out which causes the temperature of the device to rise. The tasks completed during the first phase 27 may be low priority and thus unlikely to be completed whilst the device is in thermally restricted mode. Therefore, it may be regarded as logical to complete these low priority tasks before entering the thermally restricted mode. Naturally it is beneficial for these additional tasks executed in the first phase 27 to be terminated before entering the thermally restricted mode 26. This allows the device to be ready to enter the thermally restricted mode.

In a second phase 28 running tasks are discontinued, essentially in the manner described above with reference to Fig. 9, in order to decrease the surface temperature, T_{dev}, 20 of the device. The increased surface temperature, T_{dev}, 20 obtained during the first phase 27 increases the heat dissipation from the device, thus allowing for faster cooling thereof.

Fig. 12 also depicts a third phase 29 which may be carried out after and in conjunction with the first 27 and second 28 phases. Alternatively, the third phase 29 could be completed in isolation. In the third phase 29 the device discontinues further tasks so that the surface temperature of the device 20 drops below a predefined temperature (in the case of Fig. 12, the predefined temperature is the lower threshold value 22 for the ambient temperature 21). Thus, when the device enters the thermally restricted mode 26, the surface temperature, T_{dev}, 20 of the device is in fact lower than desired. Fig. 12 depicts an additional task 30 being carried out during the thermally restricted mode. The additional task 30 causes the surface temperature of the device 20 to increase, but due to the precooling in the third phase 29, the surface temperature of the device increases to within the threshold 22 of the ambient temperature 21. Thus, the precooling during the third phase 29 allows for such a task 30 to be performed.

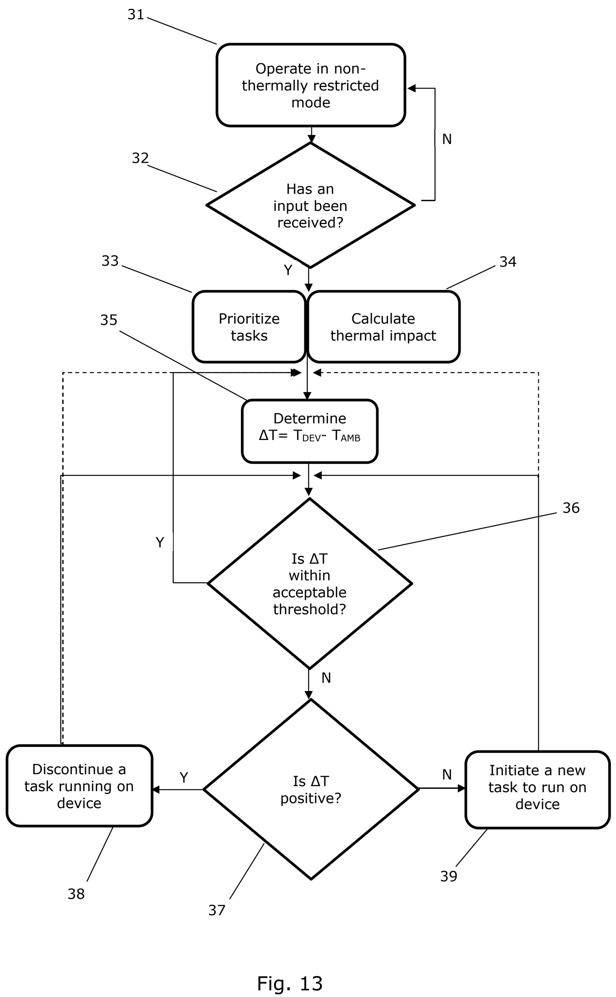

Fig. 13 shows a flow chart of a method according to an embodiment of the claimed invention. In step 31 the device may be operating normally, i.e. it is not in the thermally restricted mode. Periodically, the device may determine if an input has been received in step 32, the input signalling that the device should enter the thermally restricted mode.

If the device determines, in step 32, that no input has been received, the device remains in normal operation, i.e., the process is returned to step 31.

If step 32 reveals that an input has been received, the device may order the tasks running on it (or are due to run on it) in terms of priority 33. The thermal impact of each of these tasks is also calculated 34. The device then, in step 35, determines a temperature difference, ΔT, between a surface temperature, T_{DEV}, of the device and the ambient temperature, T_{AMB}.

After step 35 has been completed, the process is forwarded to step 36, where it is investigated whether or not ΔT is within a predetermined threshold. If this is the case, then the device loops back to step 35. This loop may be beneficial to periodically confirm that the surface temperature of the device, or the ambient temperature has not changed. This may be if the device is moved from, for example, outside to inside, which may have a significant change to the ambient temperature.

If the device in step 36 determines that ΔT is outside the predetermined threshold, the process is forwarded to step 37 where it is investigated whether ΔT is positive or negative. Step 37 is necessary as it indicates which of the further steps, 38 or 39 should be completed to reduce the difference between the surface temperature of the device and the ambient temperature.

If the surface temperature is above the ambient temperature, and ΔT is therefore positive, then it may be beneficial to reduce the surface temperature of the device. Therefore, when this is the case, the process is forwarded to step 38, where the task with the lowest priority out of the list of priority ordered tasks is discontinued. Once step 38 is completed, the device may revert to step 35 to redetermine the temperature difference. The device may also revert to before step 33/34 to confirm there is no change to the priority order of the tasks. Further alternatively, step 38 may comprise discontinuing a number of tasks before reverting to step 35.

If step 37 reveals that the surface temperature is below the ambient temperature, and ΔT is therefore negative, the process is forwarded to step 39, where a new task is initiated in order to raise the surface temperature of the device. The first new task initiated may be the task with the highest priority order in the ordered list. As with step 38 after step 39 is completed, the device may revert to step 35 to redetermine the temperature difference. The device may also revert to before step 33/34 to confirm there is no change to the priority order of the tasks. Further alternatively, step 39 may comprise initiating a number of tasks before reverting to step 35.

## Claims

1. A method for controlling a portable computing device, the method comprising the steps of:
- the computing device receiving an input causing the computing device to start operating in a thermally restricted mode,
- upon starting operation in the thermally restricted mode, deriving a temperature difference, ΔT=T_{dev}-T_{amb}, between a surface temperature, T_{dev}, of the computing device and an ambient temperature, T_{amb},
- prioritizing computing tasks running on the computing device or scheduled to run on the computing device,
- estimating, for each of the prioritized computing tasks, a thermal impact on the surface temperature, T_{dev}, of the computing device by performing the computing task, and
- operating the computing device by performing computing tasks while taking the priority order of the computing tasks and the thermal impact of the computing tasks into account, and in such a manner that the temperature difference, ΔT, is maintained within a predefined range around zero.

2. The method according to claim 1, wherein the step of operating the computing device comprises the step of:
- in the case that the temperature difference, ΔT, is positive and above a predefined first threshold value, discontinuing, in priority order, running computing tasks , starting with computing tasks of low priority, so as to decrease the surface temperature, T_{dev}, of the computing device and reducing the temperature difference, ΔT.

3. The method according to claim 1 or 2, wherein the step of operating the computing device comprises the step of:
- in the case that the temperature difference, ΔT, is negative and below a predefined second threshold value, initiating one or more computing tasks in priority order, starting with computing tasks of high priority, so as to increase the surface temperature, T_{dev}, of the computing device and reducing the temperature difference, ΔT.

4. The method according to any of the preceding claims, wherein the input is received at a first point in time, t₀, and the start of operation in the thermally restricted mode occurs at a second point in time, t₁, wherein t₁ occurs later than t₀.

5. The method according to 4, further comprising the step of, during the period between t₀ and t₁, preparing the computing device for operation in the thermally restricted mode.

6. The method according to claim 5, wherein the step of preparing the computing device comprises:
- in a first phase, initiating further computing tasks to increase the surface temperature, T_{dev}, of the computing device, and
- in a second phase, discontinuing one or more of the initiated further computing tasks to allow the surface temperature, T_{dev}, of the computing device to decrease.

7. The method according to claim 6, wherein the step of preparing the computing device further comprises:
- in a third phase, pre-cooling the surface of the computing device to a temperature below a predefined temperature level.

8. The method according to any of claims 5-7, wherein the step of preparing the computing device for operation in the thermally restricted mode comprises taking into account an ambient temperature prevailing at a location where the computing device is expected to be positioned when operation in the thermally restricted mode is started.

9. The method according to any of the preceding claims, further comprising the step of, in the case that a thermally restricted mode is not planned or scheduled, performing computing tasks regardless of priority and thermal impact.

10. The method according to any of the preceding claims, wherein the step of estimating a thermal impact is performed on the basis of a thermal capacity of the computing device and on the temperature difference, ΔT.

11. The method according to any of the preceding claims, wherein the step of operating the computing device comprises allowing the temperature difference, ΔT, to increase above a level outside the predefined range, in the case that one or more critical computing tasks need to be performed.

12. The method according to any of the preceding claims, wherein the input is provided manually.

13. The method according to any of the preceding claims, wherein the computing device comprises two or more different processing systems, each processing system being configured to perform one or more types of computing tasks, and wherein the step of estimating a thermal impact comprises taking into account the processing system configured to perform a given task.

14. The method according to claim 13, further comprises the step of optimizing a schedule of assignment of computing tasks to different processing systems depending on the total thermal impact of all tasks.

15. The method according to any of the preceding claims, further comprising the step of predicting a temperature difference, ΔT_{pred}, within a future prediction horizon, based on the estimated thermal impact of the tasks currently running on the computing device, the estimated thermal impact of the tasks scheduled to run on the computing device within the future prediction horizon, and expected ambient temperature within the future prediction horizon, and wherein the step of operating the computing device comprises operating the computer device such that the predicted temperature difference, ΔT_{pred}, is maintained within the predefined range.

16. The method according to any of the preceding claims, wherein the step of operating the computing device comprises adjusting a clock frequency of the computing device.
